(19) Europäisches Patentamt / European Patent Office / Office européen des brevets

(11) **EP 4 700 074 A1**

(12) **EUROPEAN PATENT APPLICATION**
published in accordance with Art. 153(4) EPC

(43) Date of publication:
**25.02.2026 Bulletin 2026/09**

(21) Application number: **24792391.5**

(22) Date of filing: **12.03.2024**

(51) International Patent Classification (IPC):
**C08J 5/18** *(2006.01)*    **B29C 55/12** *(2006.01)*
**B32B 15/085** *(2006.01)*    **B32B 27/32** *(2006.01)*
**H01G 4/32** *(2006.01)*    **B29K 23/00** *(2006.01)*
**B29L 7/00** *(2006.01)*

(52) Cooperative Patent Classification (CPC):
**B29C 48/88; B29C 55/12; B32B 15/085;
B32B 27/32; C08J 5/18; H01G 4/32;** B29K 2023/00;
B29L 2007/00

(86) International application number:
**PCT/JP2024/009622**

(87) International publication number:
**WO 2024/219115 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.04.2023 JP 2023067622**

(71) Applicant: **Oji Holdings Corporation**
**Chuo-ku**
**Tokyo 104-0061 (JP)**

(72) Inventors:
• **INAMOTO, Takahiro**
  **Tokyo 104-0061 (JP)**
• **HIATE, Kazuyuki**
  **Tokyo 104-0061 (JP)**
• **NAKAO, Koudai**
  **Tokyo 104-0061 (JP)**
• **SUEYOSHI, Michiko**
  **Tokyo 104-0061 (JP)**
• **TOMINAGA, Takeshi**
  **Tokyo 104-0061 (JP)**

(74) Representative: **Müller-Boré & Partner**
**Patentanwälte PartG mbB**
**Friedenheimer Brücke 21**
**80639 München (DE)**

(54) **BIAXIALLY STRETCHED POLYPROPYLENE FILM**

(57)    Provided is a polypropylene film that enables stable film formation for a longer period of time, and that has higher voltage endurance (in particular, voltage endurance at high temperatures) and a higher yield rate.

The biaxially stretched polypropylene film has a first surface and a second surface, the average maximum length of substantially elliptical spots on the first surface being 3.0 mm or less, and the difference between the average reduced peak height Rpk outside the spots and the average reduced peak height Rpk within the spots being 0.040 μm or less.

Fig. 1

**Description**

Technical Field

The present invention relates to a biaxially stretched polypropylene film and the like.

Background Art

Polypropylene films have excellent electrical characteristics, such as high voltage endurance and low dielectric loss, and also have high moisture resistance. Therefore, they are widely used in electronic and electrical devices. Specifically, polypropylene films are used, for example, as films for use in high-voltage capacitors; filter capacitors and smoothing capacitors for power conversion circuits such as converters and inverters; and the like.

In particular, polypropylene films are recently beginning to be widely used as capacitors for inverter power supplies that control the drive motors of, for example, electric and hybrid vehicles. Capacitors for inverter power supplies used in vehicles etc. are required to have a small size, light weight, and high capacity, as well as high reliability over a long period of time.

PTL 1 discloses a biaxially stretched polypropylene film for capacitors, wherein the number per 0.1 mm$^2$ of protrusions and the ten-point average roughness satisfy a predetermined relationship. As the effects of the biaxially stretched polypropylene film for capacitors with the above configuration, PTL 1 teaches that even though it is a thin film, the film has excellent processing suitability and exhibits high voltage endurance even in wide atmospheric temperature conditions from low temperature (-40°C) to high temperature (150°C).

Citation List

Patent Literature

PTL 1: WO2013/146367

Summary of Invention

Technical Problem

Due to the recent trend toward smaller capacitors with higher capacity, polypropylene films used as resin films for capacitors in electric and hybrid vehicles etc. need to be thinner and are required to have a larger electrode area. Further, in recent years, there is a strong demand for further cost reduction, and as a method for producing a film, a method for forming a resin sheet by stretching at high speed has been considered. There is also a demand for producing a capacitor element having voltage endurance (in particular, voltage endurance at high temperatures) in a high yield.

Thus, an object of the present invention is to provide a polypropylene film that enables stable film formation for a longer period of time, and that has higher voltage endurance (in particular, voltage endurance at high temperatures) and a higher yield rate.

Solution to Problem

The present inventors conducted extensive research and found the following.

Since polypropylene films for the above applications are thin and flexible, their cast sheets, which are stretch precursors, are also thin and flexible. When such a cast sheet is continuously conveyed, air bubbles are likely to enter between the sheet and a conveying roll. In such a case, the sheet is not uniformly brought into close contact with the roll, and the portions that were not brought into contact with the roll appear as elliptical depressions on the sheet surface.

In addition, the conveying roll is heated in order to form β-crystals on the surface of the cast sheet and to impart plasticity to the sheet before stretching. When the elliptical depressions described above are scattered on the surface of the sheet, the state of contact of these portions with the conveying roll differs from that of the other portions, resulting in differences in the formation of β-crystals and the state of roughening during stretching. In such a case, elliptical spots appear scattered on the film surface.

If the difference in surface roughness between the "spots" and the other portions becomes large, the film tends to break during transverse stretching. This is believed to be because when there are portions in the sheet plane that have been formed with different thermal histories, the plasticity of the resin during transverse stretching becomes locally non-uniform, inducing film rupture due to stretching.

Furthermore, in practical use, the spots tend to reduce the voltage endurance of capacitor elements and significantly reduce the yield. It is believed that local surface roughness differences in the sheet plane result in local interlayer adhesion differences within the wound metallized polypropylene film, causing damage to the film due to electric field concentration.

The present inventors further conducted extensive research based on the above findings, and found that the above problems can be solved by a biaxially stretched polypropylene film having a first surface and a second surface, the average maximum length of substantially elliptical spots on the first surface being 3.0 mm or less, and the difference between the average reduced peak height Rpk outside the spots and the average reduced peak height Rpk within the spots being 0.040 μm or less. Specifically, the present invention includes the following embodiments.

Item 1. A biaxially stretched polypropylene film having a first surface and a second surface,

the average maximum length of substantially elliptical spots on the first surface being 3.0 mm or less, and
the difference between the average reduced peak height Rpk outside the spots and the average reduced peak height Rpk within the spots being 0.040 μm or less.

Item 2. The biaxially stretched polypropylene film according to Item 1, wherein the difference between the average reduced valley depth Rvk outside the spots and the average reduced valley depth Rvk within the spots is 0.020 μm or less.

Item 3. The biaxially stretched polypropylene film according to Item 1, which has a slow axis angle variation range of 0.3° or more and 2.8° or less.

Item 4. The biaxially stretched polypropylene film according to Item 1, wherein the average number of substantially elliptical spots per 11.5 mm × 8.6 mm area on the first surface is 0.6 or less.

Item 5. The biaxially stretched polypropylene film according to Item 1, wherein a polypropylene resin forming the biaxially stretched polypropylene film has a weight average molecular weight Mw of 250000 or more and 450000 or less, a ratio of weight average molecular weight Mw to number average molecular weight Mn (Mw/Mn) of 5.0 or more and 12.0 or less, a melt flow rate at 230°C and a load of 2.16 kg of 7.0 g/10 min or less, and a heptane insoluble content of 96.0% or more and 99.5% or less.

Item 6. The biaxially stretched polypropylene film according to Item 1, which has a thickness of 1.7 μm or more and 6.5 μm or less.

Item 7. The biaxially stretched polypropylene film according to Item 1, which is a single-layer film.

Item 8. The biaxially stretched polypropylene film according to any one of Items 1 to 7, which is for use in a capacitor.

Item 9. A metal layer-integrated polypropylene film comprising the biaxially stretched polypropylene film of any one of Items 1 to 7 and a metal layer disposed on one or both surfaces of the biaxially stretched polypropylene film.

Item 10. A capacitor comprising the metal layer-integrated polypropylene film of Item 9.

Item 11. A method for producing the biaxially stretched polypropylene film of any one of claims 1 to 7, comprising:

obtaining a cast sheet using a casting drum having a microcracked surface in which when an imaginary line having a length of 0.1 mm is drawn in the width direction at any position on the surface, 1 or more and 15 or fewer grooves intersect with the imaginary line, and the grooves each have a width of 1 μm or more and 10 μm or less; and
subjecting the cast sheet to biaxial stretching treatment.

Advantageous Effects of Invention

The present invention provides a polypropylene film that enables stable film formation for a longer period of time, and that has higher voltage endurance (in particular, voltage endurance at high temperatures) and a higher yield rate.

Brief Description of Drawings

Fig. 1 shows photographic images of typical substantially elliptical spots.
Fig. 2 shows the major axis and the minor axis of a typical spot.
Fig. 3 shows, with circles, the measurement locations for the reduced peak height Rpk and the reduced valley depth Rvk within a typical spot.

Description of Embodiments

In the present specification, the terms "comprise" and "contain" include the concepts of "comprise," "contain," "consist essentially of," and "consist of."

In the present specification, based on the range shown by describing the upper limit and/or lower limit for each parameter, ranges in which the upper limit and/or lower limit is arbitrarily exchanged between a plurality of ranges are also exemplified.

1. Biaxially Stretched Polypropylene Film

In one embodiment, the present invention relates to a biaxially stretched polypropylene film having a first surface and a second surface, the average maximum length of substantially elliptical spots on the first surface being 3.0 mm or less, and the difference between the average reduced peak height Rpk outside the spots and the average reduced peak height Rpk within the spots being 0.040 $\mu$m or less (in the present specification, also referred to as "the polypropylene film of the present invention"). This is described below.

Of the two main surfaces of the polypropylene film of the present invention, one surface is the first surface, and the other surface is the second surface. The first surface is the surface on which a metal layer is to be stacked during capacitor production.

The average maximum length of substantially elliptical spots on the first surface of the polypropylene film of the present invention is 3.0 mm or less (characteristic 1).

The "spots" regarding characteristic 1 are regions that are visible on an image according to the measurement method described later, and that differ from the surrounding areas in terms of the degree of roughening and/or the roughened surface shape. The maximum length (the major axis) of each spot can be, for example, 10 mm or less, 8 mm or less, 7 mm or less, 6 mm or less, or 5 mm or less.

Furthermore, in a preferred embodiment of the present invention, from the viewpoint of further improving the film-forming stability and/or the yield rate of the film with higher voltage endurance, the average number of substantially elliptical spots per 11.5 mm $\times$ 8.6 mm area on the first surface is preferably 0.6 or less.

The method for measuring the average number of spots and the average maximum length of spots is as follows.

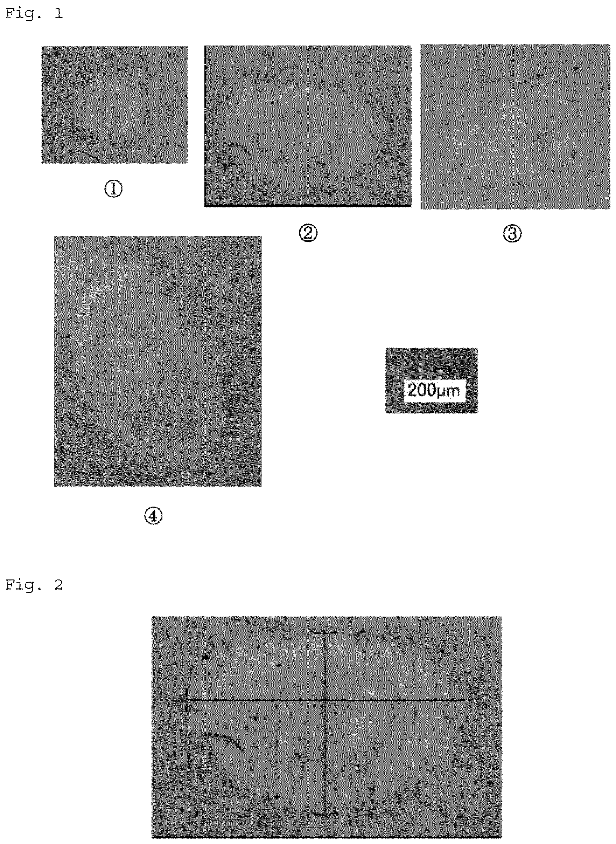

50 mm $\times$ 50 mm samples for measurement are cut out from the center in the width direction of a biaxially stretched polypropylene film to be measured, at 10 locations in total at 10 m intervals in the longitudinal direction. Subsequently, using a digital microscope (VHX-2000 Digital Microscope, produced by Keyence Corporation), an image of one surface (the surface on which a metal layer is to be stacked during capacitor production) of each sample for measurement was observed in a "halation removal + sharpness mode (a process for making the color vivid, emphasizing the contour, and removing glare is performed)" under the following conditions: lens magnification: 30x, light amount: 50% of full range, measurement method: reflection measurement, and field of view: 11.5 mm $\times$ 8.6 mm. The number of substantially elliptical "spots" (a typical example is shown in Fig. 1) observed within the field of view is measured. If a part of a spot is not within the field of view, the spot is not measured. The number of spots in the field of view of each sample for measurement (10 samples in total) is summed, and the obtained total value is divided by 10 (= number of samples for measurement) to determine the average number of elliptical spots per field of view (11.5 mm $\times$ 8.6 mm area). In addition, for each spot measured above, the diameter in the longitudinal direction and the diameter in the width direction of the biaxially stretched polypropylene film are measured, and the longer diameter (the major axis of the spot) is defined as the maximum length of the spot (in the typical example shown in Fig. 2, the diameter in the transverse direction is the major axis). The maximum length of each spot is summed, and the obtained total value is divided by the number of spots to determine the average maximum length of spots.

The average number of spots is preferably 0 or more and 0.3 or less, more preferably 0 or more and 0.1 or less, and particularly preferably 0, from the viewpoint of film-forming stability, yield rate, and the like.

The average maximum length of spots is preferably 0 mm or more and 1.0 mm or less, more preferably 0 mm or more and 0.5 mm or less, and particularly preferably 0 mm (= the average number of spots is 0), from the viewpoint of film-forming stability, yield rate, and the like.

The difference between the average reduced peak height Rpk outside the spots and the average reduced peak height Rpk within the spots in the polypropylene film of the present invention is 0.040 $\mu$m or less (characteristic 2).

The method for measuring the difference between the average reduced peak height Rpk outside the spots and the average reduced peak height Rpk within the spots is as follows.

The reduced peak height Rpk of one surface (the surface on which a metal layer is to be stacked during capacitor production) of a biaxially stretched polypropylene film to be measured is measured using a VertScan 2.0 (model: R5500GML) produced by Ryoka Systems Inc. as an optical interference-type non-contact surface shape measuring instrument. First, using the WAVE mode, a 530 white filter and a 1$\times$BODY lens barrel are applied, and a 10x objective lens is used to make measurements in an area of 470.92 $\mu$m $\times$ 353.16 $\mu$m per field of view.

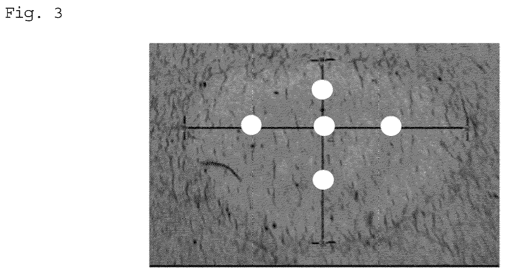

The reduced peak height Rpk within each of all of the spots measured by the method for measuring the number of spots described above is measured at the five locations shown in Fig. 3 (the intersection of the major axis and the minor axis; the center of the line connecting one end of the major axis and the intersection; the center of the line connecting the other end of the major axis and the intersection; the center of the line connecting one end of the minor axis and the intersection; and the center of the line connecting the other end of the minor axis and the intersection).

The reduced peak height Rpk outside the spots is measured at the center of each sample for measurement cut out in the method for measuring the number of spots described above.

The obtained data is subjected to noise removal processing using a median filter ($3 \times 3$). Gaussian filtering with a cutoff value of 30 $\mu$m is then performed to remove the waviness component. This enables the condition of the measurement surface to be properly measured. Subsequently, analysis is performed using VS-Viewer analysis software of VertScan 2.0, and the average of the values of reduced peak height Rpk obtained at the locations described above, which is a lubricity evaluation parameter, is calculated. Specifically, the average value is calculated as follows.

The measured values of reduced peak height Rpk within the spots are summed, and the obtained total value is divided by X (= number of spots measured $\times$ 5 (measurement locations within one spot)) to determine the average reduced peak height Rpk within the spots.

The measured values of reduced peak height Rpk outside the spots of the samples for measurement are summed, and the obtained total value is divided by 10 (= number of samples for measurement) to determine the average reduced peak height Rpk outside the spots.

The average reduced peak height Rpk within the spots is subtracted from the average reduced peak height Rpk outside the spots to determine the difference between them.

The difference between the average reduced peak height Rpk outside the spots and the average reduced peak height Rpk within the spots is preferably 0 $\mu$m or more and 0.030 $\mu$m or less, more preferably 0 $\mu$m or more and 0.010 $\mu$m or less, and particularly preferably 0 $\mu$m, from the viewpoint of film-forming stability, yield rate, and the like. When the average number of spots is 0, the difference is 0 $\mu$m.

The average reduced peak height Rpk outside the spots (= the average reduced peak height Rpk of the film when the average number of spots is 0) is preferably 0.010 $\mu$m or more and 0.095 $\mu$m or less, more preferably 0.015 $\mu$m or more and 0.090 $\mu$m or less, and even more preferably 0.020 $\mu$m or more and 0.085 $\mu$m or less, from the viewpoint of high-temperature durability of capacitor elements and the like.

When the average number of spots exceeds 0, the average reduced peak height Rpk within the spots is preferably 0.003 $\mu$m or more and 0.095 $\mu$m or less, more preferably 0.005 $\mu$m or more and 0.090 $\mu$m or less, and even more preferably 0.010 $\mu$m or more and 0.085 $\mu$m or less, from the viewpoint of film-forming stability, yield rate, and the like.

The combination of characteristic 1 and characteristic 2 described below further improves the film-forming stability and the yield rate of the film with higher voltage endurance. Although not intended to be a restrictive interpretation, the reason for this is believed to be as follows. If characteristic 1 and characteristic 2 are satisfied, the thermal history of the cast sheet, which is a stretch precursor, is believed to have been moderately uniform in the film production process, resulting in uniform plasticity during transverse stretching and suppression of film rupture. When a capacitor is produced using such a film, a capacitor having voltage endurance can be efficiently obtained in a high yield. It is believed that in a capacitor produced using such a film, the gaps between the film layers are moderately uniform, which makes it less likely for electric field concentration due to local interlayer adhesion to occur. This is believed to suppress film damage caused by local heat generation inside the capacitor, thereby achieving the effects described above.

From the viewpoint of further improving the film-forming stability and/or the yield rate of the film with higher voltage endurance, the difference between the average reduced valley depth Rvk outside the spots and the average reduced valley depth Rvk within the spots of the polypropylene film of the present invention is preferably 0.020 $\mu$m or less. The difference is more preferably 0 $\mu$m or more and 0.015 $\mu$m or less, even more preferably 0 $\mu$m or more and 0.010 $\mu$m or less, and particularly preferably 0 $\mu$m. When the average number of spots is 0, the difference is 0 $\mu$m. Although not intended to be a restrictive interpretation, it is believed that by setting the difference within the above range, leakage current is less likely to occur from locally thin portions, and the plasticity during transverse stretching is also made uniform, resulting in further improvement in the film-forming stability and/or the yield rate of the film with higher voltage endurance.

The method for measuring the difference between the average reduced valley depth Rvk outside the spots and the average reduced valley depth Rvk within the spots is based on the method for measuring the difference between the average reduced peak height Rpk outside the spots and the average reduced peak height Rpk within the spots described above.

The measured values of reduced valley depth Rvk within the spots are summed, and the obtained total value is divided by X (= number of spots measured $\times$ 5 (measurement locations within one spot)) to determine the average reduced valley depth Rvk within the spots.

The measured values of reduced valley depth Rvk outside the spots of the samples for measurement are summed, and the obtained total value is divided by 10 (= number of samples for measurement) to determine the average reduced valley depth Rvk outside the spots.

The average reduced valley depth Rvk within the spots is subtracted from the average reduced valley depth Rvk outside the spots to determine the difference between them.

The average reduced valley depth Rvk outside the spots (= the average reduced valley depth Rvk of the film when the average number of spots is 0) is preferably 0.005 $\mu$m or more and 0.060 $\mu$m or less, more preferably 0.010 $\mu$m or more and 0.050 $\mu$m or less, and even more preferably 0.015 m or more and 0.040 $\mu$m or less, from the viewpoint of high-temperature durability of capacitor elements and the like.

When the average number of spots exceeds 0, the average reduced valley depth Rvk within the spots is preferably 0.001 $\mu$m or more and 0.045 $\mu$m or less, more preferably 0.002 $\mu$m or more and 0.040 $\mu$m or less, and even more preferably 0.003 $\mu$m or more and 0.035 $\mu$m or less, from the viewpoints of film-forming stability, reduction in the number of insulation defects, and the like.

From the viewpoint of further improving the film-forming stability and/or the yield rate of the film with higher voltage endurance, it is preferred that the polypropylene film of the present invention has 1.0 or fewer insulation defects per 10 $m^2$ when a DC voltage of 600 V per 1 $\mu$m of thickness is applied using an insulation defect inspection apparatus with an unwinding-winding mechanism. The number of insulation defects is more preferably 0 to 0.5 defects/10 $m^2$, even more preferably 0 to 0.1 defects/10 $m^2$, and particularly preferably 0 defects/10 $m^2$. Although not intended to be a restrictive interpretation, a capacitor produced using such a film is less prone to film damage due to short-circuit failure even when used for a long period of time in a high-temperature environment, thus achieving high reliability.

The method for measuring the number of insulation defects is as follows.

The number of insulation defects (defects/10 $m^2$) in a biaxially stretched polypropylene film to be measured is measured using an insulation defect inspection apparatus with an unwinding-winding mechanism. The polypropylene film to be measured is run between a high-voltage electrode and a grounded metal roller while applying a DC voltage. During this process, the number of discharges occurring at insulation defect sites is measured by using a counter attached to the apparatus. The measured number is divided by the measured area to calculate the number of insulation defects in the film (defects/10 $m^2$). The measurement conditions are as follows.

- Distance between the high-voltage electrode and the grounded metal roller: 50 $\mu$m
- Wrap angle at which the film contacts the grounded metal roller: 120°
- Shape of the high-voltage electrode: metal plate with a thickness of 4 mm and the same width as that of the metal roller
- Unwinding speed: 20 m/min
- DC voltage: 600 V/$\mu$m
- Measured area: 472 $m^2$
- Test environment temperature: 20°C

From the viewpoint of further improving the film-forming stability and/or the yield rate of the film with higher voltage endurance, it is preferred that in the polypropylene film of the present invention, the variation range of the slow axis angle is 0.3° or more and 2.8° or less. The variation range is more preferably 0.3° or more and 2.0° or less, even more preferably 0.3° or more and 1.5° or less, and still even more preferably 0.3° or more and 1.0° or less.

The slow axis angle of the biaxially stretched polypropylene film refers to the acute angle formed between the width direction and the slow axis of the biaxially stretched polypropylene film. The polypropylene film of the present invention is a polypropylene film biaxially stretched in a first direction and a second direction perpendicular to the first direction. The biaxial stretching causes the polymer to be oriented in plane; thus, the biaxially stretched film exhibits birefringence. In the film plane, the direction in which the refractive index is maximum is called the slow axis because it is the direction in which light travels slowly (phase lag occurs).

In a sequential biaxial stretching method, a cast sheet is stretched in the machine direction (MD) and then stretched in the transverse direction (TD). In this case, regarding the slow axis of the biaxially stretched polypropylene film, the refractive index in the transverse direction, which is the second direction, tends to be larger than the refractive index in the machine direction, which is the first direction. Here, the transverse direction, which is the second direction, becomes the slow axis.

In transverse direction (TD) stretching, when stretching is fully performed in the transverse direction (when stretching is fully performed in the direction perpendicular to the machine direction), the slow axis angle defined in the present specification is 0°. However, in reality, due to shrinkage stress, external mechanical force, thermoplasticity of the film, etc. during stretching, the film cannot be fully stretched in the transverse direction (TD), and the slow axis angle tends to be greater than 0°.

In a portion in which the variation range of the slow axis angle is large in the longitudinal direction, film distortion is likely to occur due to non-uniform stretching. The non-uniformity in stretching tends to, in practice, decrease the voltage endurance performance of capacitors and significantly reduce the yield. This is believed to be because when the stretching in the longitudinal direction is non-uniform, dimensional changes inside the capacitor exposed to high temperatures become non-uniform, resulting in local interlayer adhesion, which causes electric field concentration and leads to film damage. It is believed that the above problems in the longitudinal direction can be suppressed by controlling the variation range of the slow axis angle in the longitudinal direction to 0.3° or more and 2.8° or less.

The method for measuring the variation range of the slow axis angle and the average slow axis angle is as follows.

50 mm × 50 mm samples for measurement are cut out from the center of a biaxially stretched polypropylene film to be measured at 10 locations in total at 10 m intervals in the longitudinal direction (at positions 0 m, 10 m, 20 m, 30 m, 40 m, 50 m, 60 m, 70 m, 80 m, and 90 m). Next, the width direction of each sample for measurement is defined as 0°, and the acute angle formed between the width direction and the slow axis of the sample for measurement is measured as the slow axis angle. Among the slow axis angles of the 10 samples for measurement, the maximum and minimum values are selected, and the difference between the maximum slow axis angle and the minimum slow axis angle is defined as the "variation range," and the average value is determined as the "average slow axis angle." The measuring apparatus and measurement conditions are as follows.

Measuring apparatus: RE-100 retardation measuring apparatus (produced by Otsuka Electronics Co., Ltd.)
Light source: laser light-emitting diode (LED)
Band-pass filter: 550 nm (measurement wavelength)
Measurement interval: 0.1 sec
Cumulative number: 10 times
Number of measurement points: 15 points
Gain: 10 dB
Measurement environment: a temperature of 23°C and a humidity of 60%

From the viewpoint of the yield rate in film production etc., the average slow axis angle is preferably 0° or more and 20° or less, more preferably 0° or more and 15° or less, and even more preferably 0° or more and 13° or less.

The upper limit of the thickness of the polypropylene film of the present invention is preferably 6.5 $\mu$m or less, more preferably 5.5 $\mu$m or less, even more preferably 3.5 $\mu$m or less, particularly preferably 3.0 $\mu$m or less, and most preferably 2.8 $\mu$m or less, from the viewpoint of further improving the miniaturization and high capacity of a capacitor when the film is used for a capacitor. From the viewpoint of the production, the lower limit of the thickness of the polypropylene film of the present invention is preferably 0.8 $\mu$m or more, more preferably 1.0 $\mu$m or more, even more preferably 1.7 $\mu$m or more, and particularly preferably 2.0 $\mu$m or more. Additionally, setting the thickness within the above range is also preferable from the viewpoint of the film-forming stability and/or the yield rate of the film with higher voltage endurance. The method for measuring the thickness of the biaxially stretched polypropylene film in the present specification is according to the method described in the Examples.

The layer structure of the polypropylene film of the present invention is not particularly limited. The polypropylene film of the present invention may be a single layer consisting of one layer, or may be multiple layers having the same or different compositions. The polypropylene film of the present invention is preferably a film composed of one or more film-like layers, and more preferably a single-layer film (a film composed of a single film-like layer).

The polypropylene film of the present invention is not particularly limited in terms of its constituent materials as long as it contains a polypropylene resin. The polypropylene resin is not particularly limited, and examples include propylene homopolymers such as isotactic polypropylene; copolymers of propylene and ethylene; long-chain branched polypropylene; and ultra-high-molecular-weight polypropylene; and the like. Among these, for example, isotactic polypropylene is preferable from the viewpoint of heat resistance.

The content of the polypropylene resin is preferably 90 mass% or more, and more preferably 95 mass% or more, based on the entire polypropylene film of the present invention (when the entire polypropylene film is taken as 100 mass%). The upper limit of the content of the polypropylene resin is, for example, 100 mass%, 98 mass%, or the like based on the entire polypropylene film of the present invention.

The polypropylene resin may be only one polypropylene resin or a combination of two or more polypropylene resins.

When the polypropylene film of the present invention contains two or more polypropylene resins, the polypropylene resin present in the greatest amount is referred to as the "polypropylene resin as the main component" in the present specification. When the polypropylene film of the present invention contains one polypropylene resin, the polypropylene resin is referred to as the "polypropylene resin as the main component" in the present specification.

In the present specification, the "polypropylene resin" referred to below without specifying whether it is the main component or not means both a polypropylene resin used as the main component and a polypropylene resin other than the main component, unless otherwise specified. For example, when the specification states that "the polypropylene resin preferably has a weight average molecular weight Mw of 250000 or more and 450000 or less," it can mean both of the following: that a polypropylene resin used as the main component preferably has a weight average molecular weight Mw of 250000 or more and 450000 or less, and that a polypropylene resin other than the main component preferably has a weight average molecular weight Mw of 250000 or more and 450000 or less.

From the viewpoint of, for example, uniformity in thickness, mechanical characteristics, and the thermomechanical property of the biaxially stretched polypropylene film, the weight average molecular weight Mw of the polypropylene resin is preferably 250000 or more and 450000 or less, more preferably 250000 or more and 420000 or less, even more preferably 250000 or more and 400000 or less, and still even more preferably 260000 or more and 390000 or less. By using such a polypropylene resin, the insulation breakdown of the film is suppressed, which makes it easy to obtain an ultra-thin biaxially stretched polypropylene film suitable for small, high-capacity capacitors. When two or more polypropylene resins are used, a polypropylene resin with an Mw of 250000 or more and less than 330000 (preferably 250000 or more and 300000 or less, more preferably 260000 or more and 290000 or less) (preferably, a polypropylene resin used as the main component) and a polypropylene resin with an Mw of 330000 or more and 450000 or less (preferably 350000 or more and 420000 or less, more preferably 370000 or more and 400000 or less, and even more preferably 370000 or more and 390000 or less) (preferably a polypropylene resin other than the main component) are preferably used in combination.

From the viewpoint of obtaining moderate resin fluidity during biaxial stretching, which makes it easy to obtain an ultra-thin biaxially stretched polypropylene film with uniform thickness, the ratio of the weight average molecular weight Mw to the number average molecular weight Mn (Mw/Mn) of the polypropylene resin is preferably 5.0 or more and 12.0 or less, more preferably 5.0 or more and 10.0 or less, and even more preferably 5.0 or more and 9.0 or less. When two or more polypropylene resins are used, a polypropylene resin having an Mw/Mn ratio of 5.0 or more and less than 7.0 (preferably 5.0 or more and 6.5 or less) (preferably a polypropylene resin used as the main component) and a polypropylene resin having an Mw/Mn ratio of 7.0 or more and 12.0 or less (preferably 7.5 or more and 10.0 or less, more preferably 7.5 or more and 9.0 or less) (preferably a polypropylene resin other than the main component) are preferably used in combination.

The method for measuring the weight average molecular weight Mw and the number average molecular weight Mn of the polypropylene resin is according to the method described in the Examples.

The melt flow rate (MFR) at 230°C and a load of 2.16 kg of the polypropylene resin is not particularly limited, and is preferably 7.0 g/10 min or less from the viewpoint of stretchability etc., and more preferably 0.5 g/10 min or more and 6.0 g/10 min or less from the viewpoint of enhancing the thickness precision of the polypropylene film of the present invention. When two or more polypropylene resins are used, a polypropylene resin having an MFR of 4.0 g/10 min or more and less than 7.0 g/10 min (preferably 4.5 g/10 min or more and 6.5 g/10 min or less, more preferably 5.0 g/10 min or more and 6.0 g/10 min or less) (preferably a polypropylene resin used as the main component) and a polypropylene resin having an MFR of 0.5 g/10 min or more and less than 4.0 g/10 min (preferably 1.0 g/10 min or more and 3.5 g/10 min or less, more preferably 1.5 g/10 min or more and 3.0 g/10 min or less) (preferably a polypropylene resin other than the main component) are preferably used in combination. The method for measuring the melt flow rate of the polypropylene resin is according to the method described in the Examples.

The heptane insoluble content (HI) of the polypropylene resin is preferably 96.0% or more and 99.5% or less, and more preferably 97.0% or more and 99.0% or less. A higher heptane insoluble content indicates higher resin stereoregularity. The use of such a polypropylene resin enhances the crystallinity moderately, and improves the initial voltage endurance and the long-term voltage endurance. The method for measuring the heptane insoluble content (HI) is according to the method described in the Examples.

The content of the polypropylene resin as the main component is preferably more than 50 mass% and 100 mass% or less, more preferably 55 mass% or more and 85 mass% or less, even more preferably 60 mass% or more and 75 mass% or less, and still even more preferably 60 mass% or more and 70 mass% or less, based on the polypropylene resin taken as 100 mass%.

The polypropylene resin can be produced by a commonly known polymerization method. Examples of the polymerization method include vapor phase polymerization, bulk polymerization, and slurry polymerization.

The polymerization may be single-stage (one-step) polymerization using a single polymerization reactor, or multistage polymerization using two or more polymerization reactors. Moreover, the polymerization may be carried out by adding hydrogen or a comonomer to the reactor as a molecular weight modifier.

As a catalyst for polymerization, a commonly known Ziegler-Natta catalyst can be used, and the catalyst is not particularly limited as long as the polypropylene resin can be obtained. The catalyst may contain a co-catalyst component or a donor. The molecular weight, molecular weight distribution, stereoregularity, etc. can be controlled by adjusting the catalyst and the polymerization conditions.

The molecular weight distribution etc. of the polypropylene resin can be adjusted by resin mixing (blending). Examples include a method of mixing two or more resins having different molecular weights or molecular weight distributions. In general, a two-polypropylene mixed system, in which a primary resin is mixed with a resin having a higher or lower average molecular weight than the primary resin in such an amount that the primary resin is present in an amount of 55 mass% or more and 90 mass% or less based on the entire resins taken as 100 mass%, is preferable because the amount of low-molecular-weight component can be easily adjusted.

In the case of using this mixing adjustment, the melt flow rate (MFR) may be used as a measure of the average molecular weight. In this case, the difference in MFR between the primary resin and the additive resin is preferably about 1 to 30 g/10 min, in terms of convenience in adjustment.

The method of mixing the resins are not particularly limited, and examples include a method of dry-blending polymer powder or pellets of the primary resin and the additive resin using a mixer or the like, and a method of supplying polymer powder or pellets of the primary resin and the additive resin to a kneader and melt-kneading them to obtain a blended resin.

The mixer and kneader are not particularly limited. The kneader can be any of a single-screw type kneader, a two-screw type kneader, or a multi-screw type kneader having three or more screws. When a kneader having two or more screws is used, the type of kneading may be rotation in the same direction or different directions.

In the case of blending by melting and kneading, the kneading temperature is not particularly limited as long as a good kneaded product is obtained. The kneading temperature is generally within the range of 200°C to 300°C. From the viewpoint of suppressing resin degradation, the kneading temperature is preferably 230°C to 270°C. In order to suppress resin degradation during kneading and mixing, the kneader may be purged with an inert gas, such as nitrogen. The molten kneaded resin may be pelletized into a suitable size using a commonly known pelletizer. In this manner, raw-material resin pellets of mixed polypropylenes can be prepared.

The use of the polypropylene resin described above makes it easier to adjust the film characteristics described above and is also preferable from the viewpoint of the film-forming stability and/or the yield rate of the film with higher voltage endurance.

The polypropylene film of the present invention may contain an additive. The additive is not particularly limited as long as it is an additive generally used for polypropylene resins.

Examples of additives include antioxidants, light stabilizers, ultraviolet absorbers, plasticizers, lubricants, crosslinking agents, flame retardants, antistatic agents, heat resistance improvers, antiblocking agents, inorganic particles, resin particles, and the like. The polypropylene resin may contain such an additive in an amount that does not adversely affect the polypropylene film of the present invention (for example, in an amount of 10 mass% or less, 5 mass% or less, 1 mass% or less, or 0.1 mass% or less, based on the polypropylene film of the present invention taken as 100 mass%).

## 2. Method for Producing Biaxially Stretched Polypropylene Film

The biaxially stretched polypropylene film can be produced by obtaining a cast sheet, which is a stretch precursor, from resin pellets and then subjecting the cast sheet to biaxial stretching treatment. As is apparent from the results of the Examples described later, the biaxially stretched polypropylene film of the present invention can be obtained by controlling microcracks on the casting drum surface, the blowing air speed of the air knife, the distance between the air outlet of the air knife and the cast sheet, the stretching nip roll temperature, the stretching nip roll hardness, etc., specifically according to the following method.

Among the production conditions described above, microcracks on the casting drum surface are an important condition. From this viewpoint, in one embodiment, the present invention relates to a method for producing the biaxially stretched polypropylene film of the present invention, the method comprising obtaining a cast sheet using a casting drum having a microcracked surface in which when an imaginary line having a length of 0.1 mm is drawn in the width direction at any position on the surface, 1 or more and 15 or fewer grooves intersect with the imaginary line, and the grooves each have a width of 1 $\mu$m or more and 10 $\mu$m or less; and subjecting the cast sheet to biaxial stretching treatment.

The method for producing the biaxially stretched polypropylene film of the present invention is described in detail below.

## 2-1. Production of Cast Sheet

The cast sheet can be formed by using known methods. For example, polypropylene resin pellets, dry-mixed polypropylene resin pellets, or mixed polypropylene resin pellets prepared by melt-kneading beforehand are supplied to an extruder, and then heated and melted. After foreign matter and denatured polymers are removed by filtration, the resulting pellets are extruded in sheet form from a T-die, and then cooled and solidified using at least one metal drum (casting drum) to form a cast sheet.

Inside the extruder, polypropylene resin undergoes some degree of degradation due to thermal deterioration or oxidative deterioration. From the perspective of suppressing such polymer degradation, the resin temperature during melt extrusion is 170°C or higher and 320°C or lower, and preferably 200°C or higher and 300°C or lower. The degradation can also be suppressed, for example, by purge of the inside of the extruder with nitrogen, the shape of the screw, the internal shape of the T-die during casting, the amount of the antioxidant added, etc.

The temperature of the casting drum is preferably maintained at 80°C or higher and 140°C or lower, and more preferably at 90°C or higher and 105°C or lower. The $\beta$-crystal fraction of the cast sheet produced in such a temperature range is about 5% or more and about 20% or less, as determined by the X-ray method. When the $\beta$-crystal fraction is within this range, the surface roughness of the film is improved appropriately to satisfy both capacitor characteristics and element winding processability.

The surface of the casting drum is not particularly limited. In terms of easily obtaining the desired physical properties of the present invention, rolls having an uneven surface, such as sandblast rolls or ceramic rolls, or microcracked rolls having an air discharge channel for entrained air are preferable. Methods for producing these rolls are known to the public. For example, microcracked rolls can be produced by or in accordance with the method described in, for example, Japanese Patent No. 6974939. Microcracks are created by stress in the metal plating layer, and the number and shape of the microcracks can be controlled by, for example, the thickness of the metal plating layer, plating conditions, heat treatment, chemical treatment, and multilayer formation. For example, when chrome plating is performed, the plating thickness is preferably 100 $\mu$m to 400 $\mu$m, more preferably 120 $\mu$m to 350 $\mu$m, and even more preferably 150 $\mu$m to 300 $\mu$m. When the plating thickness falls within this range, the shape and number of grooves can be more easily controlled and cracks are less likely to occur when rolls are heated.

For example, microcracked rolls preferably have a surface such that when an imaginary line having a length of 0.1 mm is drawn in the width direction at any position on the surface, 1 or more and 15 or fewer grooves, preferably 2 or more and 10 or fewer grooves, and more preferably 3 or more and 8 or fewer grooves, intersect with the imaginary line. The width of each groove is preferably 1 $\mu$m or more and 10 $\mu$m or less, more preferably 2 $\mu$m or more and 9 $\mu$m or less, and even more preferably 3 $\mu$m or more and 8 $\mu$m or less. When microcracked rolls having the aforementioned number of grooves and having a groove width within the aforementioned range are used, air that enters between the casting drum and the cast sheet is appropriately discharged. Therefore, even a thinned cast sheet can be easily conveyed in close contact with a cast drum, making it possible to easily obtain an ultra-thin biaxially stretched polypropylene film. Furthermore, even when the forming speed of the thinned cast sheet is increased, the phenomenon of thickness undulation of the cast sheet, which is commonly known as draw resonance (surging), is less likely to occur, making it possible to easily obtain an ultra-thin biaxially stretched polypropylene film with uniform thickness in the longitudinal direction.

The method for bringing the sheet into close contact with the casting drum can be any method, such as the air knife method, the touch roll method, the electrostatic application method, or the water-cooled casting method. The air knife method is preferable because this method allows for easy adjustment of close contact of the sheet and can be handled in a simple manner.

When an air knife is used, the velocity of blown air is preferably 70 m/sec or more and 130 m/sec or less, more preferably 80 m/sec or more and 120 m/sec or less, and even more preferably 90 m/sec or more and 110 m/sec or less. The distance between the air outlet of the air knife and the cast sheet is preferably 2 mm or more and 5 mm or less, more preferably 2 mm or more and 4 mm or less. When the air knife is used within such a range, a thinned resin extruded in sheet form from a T-die can be appropriately brought into close contact with the casting drum, while also suppressing film flutter of the resin in a molten state from the T-die outlet until the resin comes into close contact with the casting drum. As a result, the film characteristics described above can be easily obtained.

2-2. Biaxial Stretching Treatment

The biaxially stretched polypropylene film of the present invention is obtained by performing biaxial stretching to orient the cast sheet in both the longitudinal and transverse directions. The stretching method is, for example, a simultaneous or sequential biaxial stretching method. From the viewpoint of stably achieving uniform thickness and improving the mechanical strength of the film, the stretching method is preferably the sequential biaxial stretching method.

In the sequential biaxial stretching method, preferably, the cast sheet is first preheated by passing the sheet through a conveying roll maintained at a temperature of 70°C or higher and 135°C or lower, preferably 80°C or higher and 130°C or lower, and subsequently heated at a temperature of 130°C or higher and 155°C or lower, preferably 140°C or higher and 150°C or lower immediately before stretching in the longitudinal direction. Heating the cast sheet in this manner suppresses excessive thermal expansion of the cast sheet, thus easily maintaining the flatness of the sheet before the longitudinal stretching described below, and allowing the sheet to easily come into uniform, close contact with the conveying roll.

From the viewpoint of easily obtaining the biaxially stretched polypropylene film of the present invention, a method of simultaneously heating both of the front and back surfaces of the cast sheet is preferred immediately before stretching the cast sheet in the longitudinal direction. The heating method is not particularly limited; however, from the viewpoint of suppressing the difference in in-plane thermal history of the cast sheet, a method of heating a stretching nip roll or a method of heating with electromagnetic radiation is preferred. From the viewpoint of being able to both fix the cast sheet and adjust the sheet temperature immediately before stretching, the method of heating a stretching nip roll is more preferable.

When a stretching nip roll is heated, the temperature of the stretching nip roll is preferably 95°C or higher and 170°C or lower, and more preferably 100°C or higher and 150°C or lower, from the viewpoint of suppressing the difference in thermal history between the front and back surfaces of the cast sheet.

When a stretching nip roll is heated, the rolls preferably have a rubber hardness of 40° or more and 80° or less, and more preferably 50° or more and 70° or less, so that their surface shape can conform to the surface shape of the cast sheet.

The cast sheet is then stretched in the longitudinal direction to no less than 3 times and no more than 7 times its original length, preferably no less than 4 times and no more than 6 times its original length, and is immediately cooled to room temperature.

After stretching in the longitudinal direction, the stretched film is guided to a tenter. With both ends of the film being held with clips heated to 80°C or higher and 140°C or lower, the stretched film is preheated at a temperature of 140°C or higher and 185°C or lower, preferably 150°C or higher and 175°C or lower, and then stretched in the width direction no less than 6 times and no more than 12 times its original length, preferably no less than 8 times and no more than 11 times its original length at a temperature of 140°C or higher and 170°C or lower, preferably 150°C or higher and 165°C or lower.

The stretched film is then relaxed, subjected to heat fixing, and then wound. The wound film is subjected to aging treatment in an atmosphere of 20°C or higher and 45°C or lower, and can then be cut into a desired product width.

## 3. Metal Layer-Integrated Polypropylene Film

In one embodiment, the present invention further provides a metal layer-integrated polypropylene film comprising the biaxially stretched polypropylene film of the present invention and a metal layer disposed on one or both surfaces of the biaxially stretched polypropylene film (which may also be referred to herein as "the metal layer-integrated polypropylene film of the present invention"). The metal layer-integrated polypropylene film of the present invention is described in detail below. A capacitor obtained by winding the metal layer-integrated polypropylene film of the present invention exhibits excellent initial voltage endurance and long-term durability under high-temperature and high-voltage conditions.

The polypropylene film of the present invention can have electrodes attached to one surface or both surfaces of the film to process the film into a capacitor. Such electrodes are not particularly limited as long as the capacitor intended by the present embodiment is obtained. Electrodes usually used for producing capacitors can be used. Examples of the electrodes include metal foils, and paper and plastic film with at least one surface being metallized.

Since capacitors are required to have a smaller size and lighter weight, it is preferable to form electrodes by directly metallizing one or both surfaces of the polypropylene film of the present invention. Examples of usable metals include single metals, such as zinc, lead, silver, chromium, aluminum, copper, and nickel; mixtures of several kinds of these metals; and alloys thereof. In consideration of, for example, the environment, economical efficiency, and capacitor performance, zinc and aluminum are preferable.

Examples of the method for directly metallizing the surface of the polypropylene film include vacuum deposition and sputtering. The method is not particularly limited, as long as the capacitor intended by the present invention can be obtained. From the viewpoint of productivity and economic efficiency, the vacuum deposition method is preferred. Examples of the vacuum deposition method generally include the crucible method and the wire method; however, the method is not particularly limited as long as the capacitor intended by the present invention can be obtained, and an optimal method can be appropriately selected.

The film resistance of the metal vapor-deposited film is preferably 1 $\Omega/\square$ or more and 100 $\Omega/\square$ or less from the viewpoint of electrical characteristics of the capacitor. From the viewpoint of self-healing (self-repairing) properties, the film resistance is preferably relatively high within this range. Further, from the viewpoint of safety, the film resistance is more preferably 5 $\Omega/\square$ or more and 50 $\Omega/\square$ or less, and even more preferably 10 $\Omega/\square$ or more and 30 $\Omega/\square$ or less. The film resistance of the metal vapor-deposited film can be measured during vapor deposition, for example, by four-terminal sensing known to those skilled in the art. The film resistance of the metal vapor-deposited film can be adjusted, for example, by regulating the evaporation source output to adjust the amount of evaporation.

When the metal vapor-deposited film is formed on one surface of the film, metal is not vapor-deposited on a predetermined width of the film from one end of the film to form an insulated margin so that the film can form a capacitor when wound. To strengthen the bond between the metal layer-integrated polypropylene film and the metalicon electrode, a heavy edge structure is preferably formed at the end opposite to the end with the insulated margin. The film resistance of the heavy edge is usually 1 $\Omega/\square$ or more and 8 $\Omega/\square$ or less, and preferably 1 $\Omega/\square$ or more and 5 $\Omega/\square$ or less. The thickness of the metal layer is not particularly limited, but it is preferably 1 nm or more and 200 nm or less.

There is no particular limitation on the margin pattern of the metal vapor-deposited film to be formed; however, from the standpoint of improving properties such as safety of the capacitor, it is preferable to form a pattern that includes a so-called special margin, such as a fishnet pattern or a T-margin pattern. Forming a metal-vapor deposited film with a pattern including a special margin on one surface of the biaxially stretched polypropylene film is preferable because it improves the safety of the obtained capacitor and is also effective in preventing, for example, breakdown and/or short circuit of the capacitor.

The method for forming a margin can be any known method with no restrictions, such as a tape method in which masking is done with tape during vapor deposition and an oil method in which masking is done by applying oil.

The metal-layer integrated polypropylene film of the present invention undergoes a winding process in which the film is wound along its longitudinal direction and processed to a capacitor of the present invention described below. Specifically, the two metal layer-integrated polypropylene films of the present invention are paired and stacked in such a manner that the metal layer and the polypropylene film are alternately overlaid, and the pair of the films are wound. The obtained wound product then undergoes the step of forming a pair of metalicon electrodes on both end faces by metal spraying to prepare a film capacitor, thereby providing a capacitor.

### 4. Capacitor

In one embodiment, the present invention provides a capacitor comprising the metal layer-integrated polypropylene film of the present invention (which may also be referred to herein as "the capacitor of the present invention"). The capacitor of the present invention is described in detail below.

In the step of preparing a capacitor, film-winding processing is performed. For example, the two metal layer-integrated polypropylene films of the present invention are paired and stacked in such a manner that the metal layer and the polypropylene film are alternately overlaid and such that the insulated margins of the two films are individually located on sides opposite to each other, i.e., one on one side and the other on the other side. In this step, the pair of the metal layer-integrated polypropylene films of the present invention are preferably stacked with a shift of 1 to 2 mm. The winder to be used is not particularly limited. For example, the Automatic Winder 3KAW-N2, produced by Kaido Mfg. Co., Ltd., can be used.

In preparing a flat capacitor, after the winding, the obtained wound product is typically subjected to pressing. Pressing helps to tighten the roll of the capacitor and/or to form the capacitor element. From the viewpoint of controlling and/or stabilizing the gap between the layers, the applied pressure is, for example, 2 to 20 kg/cm$^2$, although the optimum value varies depending on, for example, the thickness of the polypropylene film.

Subsequently, both end faces of the wound product are subjected to metal thermal spraying to form metalicon electrodes, thereby preparing a capacitor. The capacitor is further subjected to a heat treatment. Specifically, in this embodiment, the method includes the step of subjecting the capacitor to heat treatment under a vacuum at a temperature of 80 to 125°C for 1 hour or longer (which may be referred to below as "heat aging").

In the step of subjecting the capacitor to heat treatment described above, the heat treatment temperature is 80°C or more and 130°C or less, and preferably 90°C or more and 125°C or less. Performing the heat treatment at a temperature within the above-stated numerical ranges can provide the effect of heat aging. Specifically, the void between the films constituting the capacitor based on the metal layer-integrated polypropylene films decreases, thereby suppressing corona discharge and also facilitating the crystallization due to the alteration of the internal structure of the metal layer-integrated polypropylene films of the present invention. As a result, the voltage endurance is considered to be improved. A temperature of the heat treatment lower than the predetermined temperature cannot sufficiently achieve the above effect of heat aging. On the other hand, a heat treatment temperature higher than the predetermined temperature may cause, for example, pyrolysis or oxidative degradation of the polypropylene film.

The method for subjecting the film capacitor to heat treatment can suitably be selected from known methods, such as a method using a thermostatic chamber in a vacuum atmosphere or a method using high-frequency induction heating. Specifically, a method using a thermostatic chamber is preferably used.

The heat treatment time is preferably 1 hour or more, and more preferably 10 hours or more, from the standpoint of achieving mechanical and thermal stability. From the standpoint of preventing molding defects such as thermal wrinkles and patterning failure, the heat treatment time is preferably 20 hours or less. The metalicon electrodes of the capacitor that has undergone thermal aging are typically welded with lead wires. To impart weather resistance and, in particular, to prevent humidity-induced degradation, the capacitor is preferably enclosed in a case and potted with epoxy resin. The capacitor of the present invention is a small and high-capacity film capacitor formed of the metal layer-integrated polypropylene film of the present invention, and has high initial voltage endurance and long-term durability under high-temperature and high-voltage conditions.

The capacitor of the present invention using the polypropylene film of the present invention is suitably used in a high-temperature environment, and can be a capacitor that has a small size and a high capacity (for example, the electrostatic capacitance is 5 $\mu$F or more, preferably 10 $\mu$F or more, and more preferably 20 $\mu$F or more, even more preferably 30 $\mu$F or more, and particularly preferably 40 $\mu$F or more. The upper limit of the electrostatic capacitance is not particularly limited, and can be, for example, 100 $\mu$F, 80 $\mu$F, 70 $\mu$F, or 60 $\mu$F). Accordingly, the capacitor of the present invention can be used, for example, as a high-voltage capacitor, a filter capacitor for various switching power supplies, converters, and inverters, or a smoothing capacitor, all of which are used in electronic devices, electrical devices, etc. The capacitor of the present invention can also be suitably used as an inverter capacitor, a converter capacitor, or the like that controls the drive motor of an electric vehicle or a hybrid vehicle, for which demand has been increasing in recent years.

Examples

The present invention is described in detail below based on Examples. However, the present invention is not limited by these Examples.

## (1) Measurement of Resin Properties

### (1-1) Measurement of Weight-average Molecular Weight (Mw), Number-average Molecular weight (Mn), and Molecular Weight Distribution (Mw/Mn) of Polypropylene Resin

The weight-average molecular weight (Mw), number-average molecular weight (Mn), and molecular weight distribution (Mw/Mn) of each polypropylene resin used as a starting material in the Examples and Comparative Examples were measured by GPC (gel permeation chromatography) under the following conditions.

Specifically, an HLC-8121GPC-HT high-temperature GPC system with a built-in differential refractometer (RI) (HLC-8121GPC-HT, produced by Tosoh Corporation) was used. Three TSKgel GMHHR-H(20)HT columns produced by Tosoh Corporation were connected in series and used as columns. The measurement was conducted at a column temperature of 140°C using trichlorobenzene as an eluent, with a flow rate of 1.0 ml/min. A calibration curve was prepared using standard polystyrene produced by Tosoh Corporation, and the measured molecular weights were converted to values in terms of polypropylene to obtain the weight-average molecular weight (Mw) and number-average molecular weight (Mn). Further, the molecular weight distribution (Mw/Mn) was obtained from the Mw and Mn values.

### (1-2) Measurement of Heptane Insoluble Content (HI)

Each polypropylene resin used as a starting material in the Examples and Comparative Examples was press-molded to 10 mm × 35 mm × 0.3 mm to prepare about 3 g of samples for measurement. Next, about 150 mL of heptane was added and Soxhlet extraction was performed for 8 hours. The heptane insoluble content was calculated from the mass of the sample before extraction and the mass of the sample after extraction.

### (1-3) Measurement of Melt Flow Rate (MFR)

The melt flow rate (MFR) of each polypropylene resin used as the starting material in the Examples and Comparative Examples was measured in the form of starting resin pellets using a melt indexer available from Toyo Seiki Co., Ltd. in accordance with Condition M of JIS K 7210. Specifically, first, 4 g of the weighed sample was inserted into a cylinder set at a test temperature of 230°C and preheated for 3.5 minutes under a load of 2.16 kg. Subsequently, the weight of the sample extruded through the bottom hole over a period of 30 seconds was measured, and the MFR (g/10 min) was determined. This measurement was performed three times, and the average value was defined as the measured value of MFR.

## (2) Preparation of Casting Drums

Casting drums A to E were prepared as metal drums (casting drums) for use in producing sheets (cast sheets) to be subjected to biaxial stretching, in the process of producing biaxially stretched polypropylene films.

When an imaginary line with a length of 0.1 mm was drawn in the width direction at an arbitrary position on the surface of each casting drum, the number of grooves intersecting with the imaginary line and the average of the groove width were measured. Specifically, the measurements were conducted in the following manner. Observations were made at a total of 12 locations on the casting drum: 4 locations along the circumferential direction of the casting drum (at 0°, 90°, 180°, and 270°, clockwise), and 3 locations along the width direction (at 10 (one end), 50 (the center), and 90 (the other end) on a face length of 100). An imaginary line of 0.1 mm in the width direction was drawn at the center of each screen. The number of grooves intersecting the imaginary line and the widths of the grooves were measured, and the average values were calculated.

Table 1 shows the number of grooves and groove width.

Table 1

| Casting drum | Number of grooves | Groove width |
|:---:|:---:|:---:|
| A | 6 | 6 μm |
| B | 1 | 8.8 μm |
| C | 10 | 1.3 μm |
| D | 12 | 3 μm |
| E | 0 | - |

## (3) Production of Biaxially Stretched Polypropylene Films

Biaxially stretched polypropylene films were produced according to the production conditions shown in Table 2. The thickness of each biaxially stretched polypropylene film was measured using a micrometer (JIS-B7502) in accordance with JIS-C2330.

Example 1

Polypropylene resin A (Mw = 270000, Mw/Mn = 5.7, heptane insoluble content = 97.8%, MFR = 5.6 g/10 min, produced by Prime Polymer) and polypropylene resin B (Mw = 380000, Mw/Mn = 8.3, heptane insoluble content = 98.8%, MFR = 2.3 g/10 min, produced by Korea Petrochemical Ind. Co., Ltd.) were fed to an extruder at a mass ratio of A:B = 65:35 and melted at a resin temperature of 230°C. After foreign matter and degraded polymer were removed by filtration using a filter installed in the middle of the polymer pipe, the molten material was extruded using a T-die and wound around a casting drum maintained at a surface temperature of 92°C to solidify the material, thus producing a 0.1 mm thick cast sheet at a speed of 60 m/min. The casting drum used was drum A shown in Table 1.

The method used for bringing the film into close contact with the casting drum was an air knife used at an air blow velocity of 110 m/s, with the distance between the air outlet of the air knife and the cast sheet being set to 3 mm.

The obtained cast sheet was preheated at a temperature of 130°C, then sandwiched between a conveying roll heated to 145°C and a stretching nip roll with a rubber hardness of 70° heated to 110°C, then stretched 5-fold in the longitudinal direction, and immediately returned to room temperature.

The stretched film was then guided to a tenter. With both ends of the film being held with clips at 110°C, the film was preheated at 170°C, stretched 10-fold in the width direction at a temperature of 155°C, and then subjected to relaxation and heat setting. The resulting biaxially stretched polypropylene film with a thickness of 2.3 $\mu$m was wound into a roll.

Example 2

A biaxially stretched polypropylene film was obtained in the same manner as in Example 1, except that in the cast sheet production, the distance between the air outlet of the air knife and the sheet was set to 5 mm.

Example 3

A biaxially stretched polypropylene film was obtained in the same manner as in Example 2, except that in the cast sheet production, the velocity of air blown out from the air knife was set to 70 m/sec.

Example 4

A biaxially stretched polypropylene film was obtained in the same manner as in Example 1, except that in the cast sheet production, drum B shown in Table 1 was used as the casting drum.

Example 5

A biaxially stretched polypropylene film was obtained in the same manner as in Example 1, except that in the cast sheet production, drum C shown in Table 1 was used as the casting drum.

Example 6

A biaxially stretched polypropylene film was obtained in the same manner as in Example 1, except for the following: in the cast sheet production, drum E shown in Table 1 was used as the casting drum, the velocity of air blown out from the air knife was set to 130 m/sec, the distance between the air outlet of the air knife and the sheet was set to 2 mm, and the temperature of the stretching nip roll during the stretching in the longitudinal direction was set to 130°C.

Example 7

A biaxially stretched polypropylene film was obtained in the same manner as in Example 6, except that the rubber hardness of the stretching nip roll during the stretching in the longitudinal direction was set to 50°.

Example 8

A biaxially stretched polypropylene film was obtained in the same manner as in Example 1, except for the following: in the cast sheet production, drum D shown in Table 1 was used as the casting drum, the velocity of air blown out from the air knife was set to 70 m/sec, and the distance between the air outlet of the air knife and the sheet was set to 5 mm.

Example 9

A biaxially stretched polypropylene film was obtained in the same manner as in Example 1, except that the thickness of the ultimately wound biaxially stretched polypropylene film was 1.8 $\mu$m.

Example 10

A biaxially stretched polypropylene film was obtained in the same manner as in Example 1, except that the thickness of the ultimately wound biaxially stretched polypropylene film was 6 $\mu$m.

Example 11

A biaxially stretched polypropylene film was obtained in the same manner as in Example 1, except that in the cast sheet production, the resin supplied to the extruder was resin A.

Comparative Example 1

In the production of a cast sheet, the same procedure as in Example 1 was carried out, except that the velocity of air blown out from the air knife was set to 140 m/sec. In this case, a biaxially stretched film could not be produced because of entry of air from the air knife into a space between the casting drum and the resin extruded in sheet form from the T-die, and the resulting significant film flutter of the molten resin extruded from the outlet of the T-die until it was brought into close contact with the casting drum.

Comparative Example 2

A biaxially stretched polypropylene film was obtained in the same manner as in Example 4, except that in the cast sheet production, the velocity of air blown out from the air knife was set to 70 m/sec, and the distance between the air outlet of the air knife and the sheet was set to 5 mm.

Comparative Example 3

A biaxially stretched polypropylene film was obtained in the same manner as in Example 5, except that in the production of the cast sheet, the velocity of air blown out from the air knife was set to 70 m/sec, and the distance between the air outlet of the air knife and the sheet was set to 5 mm.

Comparative Example 4

A biaxially stretched polypropylene film was obtained in the same manner as in Example 6, except that the temperature of the stretching nip roll during the stretching in the longitudinal direction was set to 90°C.

Comparative Example 5

A biaxially stretched polypropylene film was obtained in the same manner as in Example 1, except that the thickness of the ultimately wound biaxially stretched polypropylene film was set to 1.6 $\mu$m.

Comparative Example 6

A biaxially stretched polypropylene film was obtained in the same manner as in Example 12, except that during the stretching in the longitudinal direction, the temperature of the stretching nip roll was set to 90°C and the hardness of the stretching nip roll was set to 50°.

Table 2

| | Polypropylene resin | | Casting drum | Velocity of air blown out from air knife | Distance between air outlet of air knife and sheet | Stretching nip roll temperature | Stretching nip roll hardness | Film thickness |
|---|---|---|---|---|---|---|---|---|
| | A | B | | | | | | |
| Example 1 | 65% | 35% | A | 110 m/sec. | 3 mm | 110°C | 70° | 2.3 μm |
| Example 2 | 65% | 35% | A | 110 m/sec. | 5 mm | 110°C | 70° | 2.3 μm |
| Example 3 | 65% | 35% | A | 70 m/sec. | 5mm | 110°C | 70° | 2.3 μm |
| Example 4 | 65% | 35% | B | 110 m/sec. | 3 mm | 110°C | 70° | 2.3 μm |
| Example 5 | 65% | 35% | C | 110 m/sec. | 3 mm | 110°C | 70° | 2.3 μm |
| Example 6 | 65% | 35% | E | 130 m/sec. | 2 mm | 130°C | 70° | 2.3 μm |
| Example 7 | 65% | 35% | E | 130 m/sec. | 2 mm | 130°C | 50° | 2.3 μm |
| Example 8 | 65% | 35% | D | 70 m/sec. | 5 mm | 110°C | 70° | 2.3 μm |
| Example 9 | 65% | 35% | A | 110 m/sec. | 3 mm | 110°C | 70° | 1.8 μm |
| Example 10 | 65% | 35% | A | 110 m/sec. | 3 mm | 110°C | 70° | 6 μm |
| Example 11 | 100% | 0% | A | 110 m/sec. | 3 mm | 110°C | 70° | 2.3 μm |
| Com. Ex. 1 | 65% | 35% | A | 140 m/sec. | 3 mm | 110°C | 70° | 2.3 μm |
| Com. Ex. 2 | 65% | 35% | B | 70 m/sec. | 5mm | 110°C | 70° | 2.3 μm |
| Com. Ex. 3 | 65% | 35% | C | 70 m/sec. | 5mm | 110°C | 70° | 2.3 μm |
| Com. Ex. 4 | 65% | 35% | E | 130 m/sec. | 2 mm | 90°C | 70° | 2.3 μm |
| Com. Ex. 5 | 65% | 35% | A | 110 m/sec. | 3 mm | 110°C | 70° | 1.6 μm |
| Com. Ex. 6 | 100% | 0% | A | 110 m/sec. | 3 mm | 90°C | 50° | 2.3 μm |

(4) Measurement of Properties of Biaxially Stretched Polypropylene Films

(4-1) Measurement of Spots

50 mm × 50 mm samples for measurement were cut out from the center in the width direction of each biaxially stretched polypropylene film obtained in the Examples and Comparative Examples, at 10 locations in total at 10 m intervals in the longitudinal direction. Subsequently, using a digital microscope (VHX-2000 Digital Microscope, produced by Keyence Corporation), an image of one surface (the surface on which a metal layer is to be stacked during capacitor production) of each sample for measurement was observed in a "halation removal + sharpness mode (a process for making the color vivid, emphasizing the contour, and removing glare)" under the following conditions: lens magnification: 30x, light amount: 50% of full range, measurement method: reflection measurement, and field of view: 11.5 mm × 8.6 mm. The number of substantially elliptical "spots" (a typical example is shown in Fig. 1) observed within the field of view was measured. If a part of a spot was not within the field of view, the spot was not measured. The total number of spots in the field of view of each sample for measurement (a total of 10 samples were used for each sample for measurement) was summed, and the obtained total value was divided by 10 (= number of samples for each sample for measurement) to determine the average number of elliptical spots per field of view (11.5 mm × 8.6 mm area).

Further, for each spot measured above, the diameter in the longitudinal direction and the diameter in the width direction of the biaxially stretched polypropylene film were measured, and the longer diameter (the major axis of the spot) was defined as the maximum length of the spot (in the typical example shown in Fig. 2, the diameter in the transverse direction is the major axis). The maximum length of each spot was summed, and the obtained total value was divided by the number of spots to determine the average maximum length of spots.

(4-2) Measurement of Reduced Peak Height Rpk and Reduced Valley Depth Rvk

The reduced peak height Rpk and reduced valley depth Rvk of one surface (the surface on which a metal layer is to be stacked during capacitor production) of each biaxially stretched polypropylene film obtained in the Examples and Comparative Examples were measured using a VertScan 2.0 (model: R5500GML) produced by Ryoka Systems Inc. as an optical interference-type non-contact surface shape measuring instrument. First, using the WAVE mode, a 530 white filter and a 1×BODY lens barrel were applied, and a 10x objective lens was used to make measurements in an area of 470.92 $\mu$m × 353.16 $\mu$m per field of view.

The reduced peak height Rpk and the reduced valley depth Rvk within each of all the spots measured above in section (4-1) were measured at the five locations shown in Fig. 3 (the intersection of the major axis and the minor axis; the center of the line connecting one end of the major axis and the intersection; the center of the line connecting the other end of the major axis and the intersection; the center of the line connecting one end of the minor axis and the intersection; and the center of the line connecting the other end of the minor axis and the intersection).

The reduced peak height Rpk and reduced valley depth Rvk outside the spots were measured at the center of each sample for measurement.

The obtained data was subjected to noise removal processing using a median filter (3 × 3). Gaussian filtering with a cutoff value of 30 $\mu$m was then performed to remove the waviness component. This enabled the condition of the measurement surface to be properly measured. Subsequently, analysis was performed using VS-Viewer analysis software of VertScan 2.0, and the averages of the reduced peak height Rpk values and the reduced valley depth Rvk values obtained at the locations described above, which are lubricity evaluation parameters, were calculated. Specifically, the average values were calculated as follows.

The measured values of reduced peak height Rpk within the spots were summed, and the obtained total value was divided by X (= number of spots measured × 5 (measurement locations within one spot)) to determine the average reduced peak height Rpk within the spots.

The measured values of reduced peak height Rpk outside the spots of samples for each sample for measurement were summed, and the obtained total value was divided by 10 (= number of samples for each sample for measurement) to determine the average reduced peak height Rpk outside the spots.

The average reduced peak height Rpk within the spots was subtracted from the average reduced peak height Rpk outside the spots to determine the difference between them.

The average reduced peak height Rpk outside the spots and the average reduced peak height Rpk within the spots were added, and the resulting value was divided by 2. The value thus obtained was defined as the average reduced peak height Rpk of the film. When the average number of spots was 0, the average of the reduced peak height Rpk values as measured at the centers of the samples for each sample for measurement was used as the average reduced peak height Rpk of the film.

The measured values of reduced valley depth Rvk within the spots were summed, and the obtained total value was divided by X (= number of spots measured × 5 (measurement locations within one spot)) to determine the average reduced valley depth Rvk within the spots.

The measured values of reduced valley depth Rvk outside the spots of samples for each sample for measurement were summed, and the obtained total value was divided by 10 (= number of samples for each sample for measurement) to determine the average reduced peak valley depth Rvk outside the spots.

The average reduced valley depth Rvk within the spots was subtracted from the average reduced valley depth Rvk outside the spots to determine the difference between them.

The average reduced valley depth Rvk outside the spots and the average reduced valley depth Rvk within the spots were added, and the resulting value was divided by 2. The value thus obtained was defined as the average reduced valley depth Rvk of the film. When the average number of spots was 0, the average of the reduced valley depth Rvk values as measured at the centers of samples for each sample for measurement was used as the average reduced peak height Rpk of the film.

(4-3) Measurement of Number of Insulation Defects

The number of insulation defects (defects/10 m$^2$) in each biaxially stretched polypropylene film obtained in the Examples and Comparative Examples was measured using an insulation defect inspection apparatus with an unwinding-winding mechanism. The polypropylene film to be measured was run between a high-voltage electrode and a grounded metal roller while applying a DC voltage. During this process, the number of discharges that occurred at insulation defect sites was measured with a counter attached to the apparatus. The measured number was divided by the measured area to calculate the number of insulation defects in the film (defects/10 m$^2$). The measurement conditions were as follows.

- Distance between the high-voltage electrode and the grounded metal roller: 50 $\mu$m
- Wrap angle at which the film contacts the grounded metal roller: 120°
- Shape of the high-voltage electrode: metal plate with a thickness of 4 mm and the same width as that of the metal roller
- Unwinding speed: 20 m/min
- DC voltage: 600 V/$\mu$m
- Measured area: 472 m$^2$
- Test environment temperature: 20°C

(4-4) Measurement of Slow Axis Angle and Variation Range of Slow Axis Angle

50 mm $\times$ 50 mm samples for measurement were cut out from the center in the width direction of each biaxially stretched polypropylene film obtained in the Examples and Comparative Examples, at 10 locations in total at 10 m intervals in the longitudinal direction (at positions 0 m, 10 m, 20 m, 30 m, 40 m, 50 m, 60 m, 70 m, 80 m, and 90 m). Next, the width direction of the samples for measurement was defined as 0°. The acute angle formed between the width direction and the slow axis of each sample for measurement was defined as the slow axis angle and measured. Among the slow axis angles of the 10 samples for each sample for measurement, the maximum and minimum values were selected, and the difference between the maximum slow axis angle and the minimum slow axis angle was defined as the "variation range" and measured. The measuring apparatus and measurement conditions used are as follows.

Measuring apparatus: RE-100 retardation measuring apparatus, produced by Otsuka Electronics Co., Ltd.
Light source: laser light-emitting diode (LED)
Band-pass filter: 550 nm (measurement wavelength)
Measurement interval: 0.1 sec
Cumulative number: 10 times
Number of measurement points: 15 points
Gain: 10 dB
Measurement environment: a temperature of 23°C and a humidity of 60%.

(4-5) Measurement Results

Table 3 shows the results of measuring the characteristics of the biaxially stretched polypropylene films.

Table 3

| | Spot | | Reduced peak height (Rpk) | | | | Reduced valley depth (Rvk) | | | | Insulation defects | Slow axis | |
|---|---|---|---|---|---|---|---|---|---|---|---|---|---|
| | Average number of spots | Average maximum length | Within spots | Outside spots | Average | Difference | Within spots | Outside spots | Average | Difference | | | |
| | Spots | mm | μm | μm | μm | μm | μm | μm | μm | μm | defects/10 m$^2$ | Average | Variation range |
| Example 1 | 0 | 0 | - | - | (0.049) | - | - | - | (0.032) | - | 0 | 1 | 0.3 |
| Example 2 | 0.2 | 0.5 | 0.035 | 0.041 | 0.038 | 0.006 | 0.016 | 0.021 | 0.019 | 0.005 | 0.02 | 1.3 | 0.8 |
| Example 3 | 0.3 | 0.7 | 0.033 | 0.048 | 0.041 | 0.015 | 0.017 | 0.028 | 0.023 | 0.011 | 0.72 | 1.4 | 0.7 |
| Example 4 | 0.5 | 1.4 | 0.032 | 0.067 | 0.050 | 0.035 | 0.014 | 0.034 | 0.024 | 0.020 | 0.83 | 1.4 | 1.4 |
| Example 5 | 0.3 | 2.2 | 0.031 | 0.068 | 0.050 | 0.037 | 0.018 | 0.032 | 0.025 | 0.014 | 0.64 | 1.7 | 1.9 |
| Example 6 | 0.1 | 2.2 | 0.048 | 0.078 | 0.063 | 0.030 | 0.021 | 0.034 | 0.028 | 0.013 | 0.46 | 3 | 1.5 |
| Example 7 | 0.1 | 0.8 | 0.058 | 0.078 | 0.068 | 0.020 | 0.031 | 0.034 | 0.033 | 0.003 | 0.21 | 3 | 1.5 |
| Example 8 | 0.2 | 0.3 | 0.029 | 0.042 | 0.036 | 0.013 | 0.013 | 0.022 | 0.018 | 0.009 | 0.42 | 1.4 | 1.1 |
| Example 9 | 0.2 | 0.2 | 0.012 | 0.022 | 0.017 | 0.010 | 0.013 | 0.015 | 0.014 | 0.002 | 0.19 | 2 | 1.5 |
| Example 10 | 0 | 0 | - | - | (0.077) | - | - | - | (0.037) | - | 0 | 0.6 | 0.7 |
| Example 11 | 0.1 | 0.4 | 0.011 | 0.021 | 0.016 | 0.010 | 0.009 | 0.019 | 0.014 | 0.010 | 0.059 | 2 | 1 |
| Comp. Ex. 1 | - | - | - | - | - | - | - | - | - | - | - | - | - |
| Comp. Ex. 2 | 0.7 | 3.3 | 0.039 | 0.095 | 0.067 | 0.056 | 0.010 | 0.033 | 0.022 | 0.023 | 1.54 | 1.3 | 3.4 |

EP 4 700 074 A1

19

(continued)

| | Spot | | Reduced peak height (Rpk) | | | | Reduced valley depth (Rvk) | | | | Insulation defects | Slow axis | |
|---|---|---|---|---|---|---|---|---|---|---|---|---|---|
| | Average number of spots | Average maximum length | Within spots | Outside spots | Average | Difference | Within spots | Outside spots | Average | Difference | | | |
| | Spots | mm | $\mu$m | $\mu$m | $\mu$m | $\mu$m | $\mu$m | $\mu$m | $\mu$m | $\mu$m | defects/10 m$^2$ | Average | Variation range |
| Comp. Ex. 3 | 0.7 | 4 | 0.031 | 0.092 | 0.062 | 0.061 | 0.009 | 0.033 | 0.021 | 0.024 | 1.95 | 2.1 | 4.2 |
| Comp. Ex. 4 | 0.9 | 3.9 | 0.021 | 0.066 | 0.044 | 0.045 | 0.011 | 0.045 | 0.028 | 0.034 | 2< | 3 | 4.4 |
| Comp. Ex. 5 | 1.3 | 3.9 | 0.011 | 0.081 | 0.046 | 0.070 | 0.009 | 0.030 | 0.020 | 0.021 | 2< | 3 | 4.4 |
| Comp. Ex. 6 | 0.5 | 2.9 | 0.008 | 0.053 | 0.031 | 0.045 | 0.008 | 0.022 | 0.015 | 0.014 | 0.66 | 2.3 | 2.9 |

(5) Evaluation of Processability

Production of the biaxially stretched films of the Examples and Comparative Examples was started. The duration from the time the obtained film reached the target thickness ($\pm$ 2%) (Table 2) to the time the film ruptured due to stretching ("the duration for which continuous film formation is possible") was measured. The time the thickness reached the target thickness ($\pm$ 2%) was confirmed according to the thickness measurement method described above in (3). The processability was evaluated according to the following evaluation criteria, based on the obtained duration for which continuous film formation is possible:

$A^{++}$: Film formation could be carried out without film rupture due to stretching even after more than 48 hours.
$A^+$: Film formation could be carried out for more than 32 hours but less than 48 hours without film rupture due to stretching.
A: Film formation could be carried out for more than 24 hours but less than 32 hours without film rupture due to stretching.
B: Film formation could be carried out for more than 16 hours but less than 24 hours without film rupture due to stretching.
C: Film rupture due to stretching occurred within more than 8 hours but less than 16 hours.
D: Film rupture due to stretching occurred within less than 8 hours.
E: Film formation could not be carried out.

Table 4 below shows the results.

(6) Evaluation of Voltage Endurance

The biaxially oriented films obtained in the Examples and Comparative Examples were used to produce capacitors. The voltage endurance of the obtained capacitors was evaluated.

(6-1) Production of Capacitors

Using a vacuum deposition machine produced by ULVAC, a T-margin deposition pattern was formed on the samples for measurement obtained above in (4-1) by aluminum vapor deposition at a vapor deposition resistance of 20 $\Omega$/ to obtain metallized films each having a metal film on one surface of the biaxially stretched polypropylene film.
After the metallized film was slit into 50 mm wide strips, the two strips were overlaid on each other and wound for 840 turns at a winding tension of 210 g using a 3KAW-N2 automatic winder (produced by Kaido Mfg. Co., Ltd.). The wound element was subjected to heat treatment at 120°C for 15 hours while being pressed. Zinc metal was melt-sprayed to the end faces of the element to obtain a flat capacitor. Lead wires were soldered to end faces of the flat capacitor, and the capacitor was then sealed with epoxy resin. The obtained capacitor had an electrostatic capacitance of 50 $\mu$F.

(6-2) Evaluation of Initial Voltage Endurance

The initial electrostatic capacitance ($C_0$), i.e., the capacitance of the capacitor before testing, was measured using an LCR HiTESTER 3522-50 produced by Hioki E.E. Corporation. Next, a DC voltage of 450 V/um was applied to the capacitor for 10 seconds. The electrostatic capacitance of the capacitor after voltage application ($C_1$) was measured similarly. The capacitance change rate before and after voltage application was calculated according to the following equation.

$$\Delta C = \frac{C_1 - C_0}{C_0} \times 100$$

The capacitance change rate $\Delta C$ was measured for 100 capacitor elements and evaluated based on the following criteria. The number of capacitors rated as $A^+$ to C was calculated. The percentage of capacitors rated as $A^+$ or A (initial withstand-voltage capacitor yield) was determined. An initial withstand-voltage capacitor yield of 95% or higher was considered acceptable.

$A^+$:

$$-0.5\% < \Delta C < -0.2\%.$$

A:

$$-1\% < \Delta C \leq -0.5\%.$$

B:

$$-2\% < \Delta C \leq -1\%.$$

C:

$$\Delta C \leq -2\%.$$

(6-3) Evaluation of Long-term Voltage Endurance

The initial electrostatic capacitance ($C_0$), i.e., the capacitance of the capacitor before testing, was measured using an LCR HiTESTER 3522-50 produced by Hioki E.E. Corporation. Next, a DC voltage of 320 V/um was continuously applied to the capacitor in a high-temperature chamber at 115°C for 1000 hours. The electrostatic capacitance of the capacitor after 1000 hours of voltage application ($C_{1000}$) was measured similarly. The capacitance change rate before and after voltage application ($\Delta_{1000}$) was calculated according to the following equation.

$$\Delta C_{1000} = \frac{C_{1000} - C_0}{C_0} \times 100$$

The capacitance change rate $\Delta C_{1000}$ was measured for 100 capacitor elements and evaluated based on the following criteria. The number of capacitors rated as A[+] to C was calculated. The percentage of capacitors rated as A[+] or A (long-term withstand-voltage capacitor yield) was determined. A long-term withstand-voltage capacitor yield of 90% or higher was considered acceptable.

A[+]:

$$-0.5\% < \Delta C_{1000} < 0.5\%.$$

A:

$$-5\% < \Delta C_{1000} \leq -0.5\%.$$

B:

$$-10\% < \Delta C_{1000} \leq -5\%.$$

C:

$$\Delta C_{1000} \leq -10\%.$$

(7) Evaluation Results

Table 4 shows the results of evaluating processability and voltage endurance.

Table 4

| | Evaluation of processability | Evaluation of initial voltage endurance | | | | | Evaluation of long-term voltage endurance | | | | |
|---|---|---|---|---|---|---|---|---|---|---|---|
| | | A+ | A | B | C | A or higher | A+ | A | B | C | A or higher |
| Example 1 | A++ | 100 | 0 | 0 | 0 | 100% | 100 | 0 | 0 | 0 | 100% |
| Example 2 | A++ | 95 | 5 | 0 | 0 | 100% | 90 | 10 | 0 | 0 | 100% |
| Example 3 | A+ | 91 | 6 | 3 | 0 | 97% | 84 | 10 | 4 | 2 | 94% |
| Example 4 | A+ | 87 | 8 | 2 | 3 | 95% | 80 | 10 | 4 | 6 | 90% |
| Example 5 | A+ | 89 | 6 | 3 | 2 | 95% | 81 | 10 | 4 | 5 | 91% |
| Example 6 | A | 92 | 4 | 2 | 2 | 96% | 88 | 7 | 2 | 3 | 95% |
| Example 7 | A | 91 | 5 | 3 | 1 | 96% | 94 | 2 | 4 | 0 | 96% |
| Example 8 | A+ | 92 | 4 | 2 | 2 | 96% | 90 | 4 | 4 | 2 | 94% |
| Example 9 | A++ | 93 | 4 | 2 | 1 | 97% | 91 | 5 | 2 | 2 | 96% |
| Example 10 | A++ | 100 | 0 | 0 | 0 | 100% | 94 | 3 | 2 | 1 | 97% |
| Example 11 | A++ | 99 | 1 | 0 | 0 | 100% | 96 | 2 | 1 | 1 | 99% |
| Com. Ex. 1 | E | - | - | - | - | - | - | - | - | - | - |
| Com. Ex. 2 | C | 66 | 14 | 9 | 11 | 80% | 55 | 22 | 10 | 13 | 77% |
| Com. Ex. 3 | D | 53 | 22 | 14 | 11 | 75% | 46 | 20 | 20 | 14 | 66% |
| Com. Ex. 4 | D | 49 | 21 | 11 | 19 | 70% | 41 | 28 | 15 | 16 | 69% |
| Com. Ex. 5 | D | 29 | 35 | 20 | 16 | 64% | 38 | 29 | 18 | 15 | 67% |
| Com. Ex. 6 | B | 83 | 8 | 9 | 0 | 91% | 70 | 12 | 10 | 8 | 82% |

**Claims**

1. A biaxially stretched polypropylene film having a first surface and a second surface,

   the average maximum length of substantially elliptical spots on the first surface being 3.0 mm or less, and the difference between the average reduced peak height Rpk outside the spots and the average reduced peak height Rpk within the spots being 0.040 $\mu$m or less.

2. The biaxially stretched polypropylene film according to claim 1, wherein the difference between the average reduced valley depth Rvk outside the spots and the average reduced valley depth Rvk within the spots is 0.020 $\mu$m or less.

3. The biaxially stretched polypropylene film according to claim 1, which has a slow axis angle variation range of 0.3° or more and 2.8° or less.

4. The biaxially stretched polypropylene film according to claim 1, wherein the average number of substantially elliptical spots per 11.5 mm × 8.6 mm area on the first surface is 0.6 or less.

5. The biaxially stretched polypropylene film according to claim 1, wherein a polypropylene resin forming the biaxially stretched polypropylene film has a weight average molecular weight Mw of 250000 or more and 450000 or less, a ratio of weight average molecular weight Mw to number average molecular weight Mn (Mw/Mn) of 5.0 or more and 12.0 or less, a melt flow rate at 230°C and a load of 2.16 kg of 7.0 g/10 min or less, and a heptane insoluble content of 96.0% or more and 99.5% or less.

6. The biaxially stretched polypropylene film according to claim 1, which has a thickness of 1.7 $\mu$m or more and 6.5 $\mu$m or less.

**7.** The biaxially stretched polypropylene film according to claim 1, which is a single-layer film.

**8.** The biaxially stretched polypropylene film according to any one of claims 1 to 7, which is for use in a capacitor.

**9.** A metal layer-integrated polypropylene film comprising the biaxially stretched polypropylene film of any one of claims 1 to 7 and a metal layer disposed on one or both surfaces of the biaxially stretched polypropylene film.

**10.** A capacitor comprising the metal layer-integrated polypropylene film of claim 9.

**11.** A method for producing the biaxially stretched polypropylene film of any one of claims 1 to 7, comprising:

obtaining a cast sheet using a casting drum having a microcracked surface in which when an imaginary line having a length of 0.1 mm is drawn in the width direction at any position on the surface, 1 or more and 15 or fewer grooves intersect with the imaginary line, and the grooves each have a width of 1 $\mu$m or more and 10 $\mu$m or less; and
subjecting the cast sheet to biaxial stretching treatment.

Fig. 1

① ② ③

④ 200μm

Fig. 2

Fig. 3

# EP 4 700 074 A1

## INTERNATIONAL SEARCH REPORT

International application No.

**PCT/JP2024/009622**

### A. CLASSIFICATION OF SUBJECT MATTER

*C08J 5/18*(2006.01)i; *B29C 55/12*(2006.01)i; *B32B 15/085*(2006.01)i; *B32B 27/32*(2006.01)i; *H01G 4/32*(2006.01)i; *B29K 23/00*(2006.01)n; *B29L 7/00*(2006.01)n
FI: C08J5/18 CES; B32B15/085 Z; B32B27/32 Z; H01G4/32 511L; B29C55/12; B29K23:00; B29L7:00

According to International Patent Classification (IPC) or to both national classification and IPC

### B. FIELDS SEARCHED

Minimum documentation searched (classification system followed by classification symbols)
C08J5/18; B29C55/12; B32B15/085; B32B27/32; H01G4/32; B29K23/00; B29L7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-100800 A (OJI HOLDINGS CORPORATION) 02 July 2020 (2020-07-02) claims, paragraphs [0013]-[0029], [0045]-[0096], [0156]-[0162], examples | 1-2, 5-10 |
| Y | | 1-10 |
| A | | 11 |
| Y | WO 2019/069540 A1 (MURATA MANUFACTURING CO., LTD.) 11 April 2019 (2019-04-11) claims, paragraphs [0039]-[0071], examples | 1-10 |
| A | | 11 |
| Y | JP 2020-200188 A (OJI HOLDINGS CORPORATION) 17 December 2020 (2020-12-17) claims, paragraphs [0028], [0038]-[0049], examples | 3 |
| A | | 11 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 May 2024** | **21 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/009622**

| Patent document cited in search report | | | Publication date (day/month/year) | Patent family member(s) | | | Publication date (day/month/year) |
|---|---|---|---|---|---|---|---|
| JP | 2020-100800 | A | 02 July 2020 | US | 2020/0377706 | A1 | |
| | | | | claims, paragraphs [0024]-[0052], [0179]-[0281], [0414]-[0457], examples | | | |
| WO | 2019/069540 | A1 | 11 April 2019 | US | 2020/0211779 | A1 | |
| | | | | claims, paragraphs, examples | | | |
| JP | 2020-200188 | A | 17 December 2020 | CN | 113905884 | A | |

Form PCT/ISA/210 (patent family annex) (July 2022)

28

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013146367 A
- JP 6974939 B